# FASCICULE DE BREVET EUROPEEN

(11) **EP 3 245 052 B1**
(45) Date de publication et mention de la délivrance du brevet: **08.05.2019**
(21) Numéro de dépôt: 16703573.2
(22) Date de dépôt: 15.01.2016
(51) Int. Cl.: B29D 30/24

(54) **TAMBOUR DE CONFECTION D'UNE ÉBAUCHE DE PNEUMATIQUE**
TROMMEL ZUM HERSTELLEN EINES REIFENROHLINGS
DRUM FOR PRODUCING A TYRE BLANK

(30) Priorité: 16.01.2015 FR 1550379
(43) Date de publication de la demande: 22.11.2017
(73) Titulaire: Compagnie Générale des Etablissements Michelin, 63000 Clermont-Ferrand (FR)
(72) Inventeur: MONBRUN, Florent, 63040 Clermont-Ferrand Cedex 9 (FR); JAQUET, Hélène, 63040 Clermont-Ferrand Cedex 9 (FR); LEBLANC, Dominique, 63040 Clermont-Ferrand Cedex 9 (FR)
(74) Mandataire: Redouté, Gilles Pierre
(86) Numéro de dépôt international: PCT/FR2016/050071
(87) Numéro de publication internationale: WO 2016/113510

(56) Documents cités:
- WO-A1-2014/057196
- US-A- 3 536 566
- US-A- 3 779 835
- US-A- 3 971 694
- US-A- 5 066 354
- US-A1- 2012 168 087

## Description

L'invention concerne les tambours servant à la fabrication des ébauches de pneumatique.

L'assemblage des éléments formant l'ensemble constitué par la ceinture sommet et la bande de roulement d'une ébauche de pneumatique de roue a lieu sur un tambour de confection, également appelé « forme sommet ». Ces éléments comprennent principalement de la gomme crue. Une fois assemblée, la bande de roulement est ôtée du tambour et déposée sur une carcasse réalisée séparément. L'association des deux forme un bandage. Après mise en forme de ce dernier, on obtient l'ébauche crue que l'on cuit ensuite pour la vulcanisation de la gomme.

La face circonférentielle du tambour servant de support à la bande de roulement en cours de réalisation est formée par des secteurs montés mobiles en direction radiale. Ainsi la rétractation de tout ou partie des secteurs permet d'extraire la bande de roulement une fois son assemblage achevé.

Un tambour de ce type est connu par exemple du document EP-1 389 520. Ce tambour a pour avantage d'assurer une bonne reprise d'efforts radiaux, en particulier lors de l'enroulement d'une bandelette à grande vitesse sur le tambour pour réaliser la bande de roulement. Toutefois le réglage du diamètre du tambour offre peu de choix pour les positions des secteurs et est malaisé à effectuer. De plus, une fois le diamètre du tambour réglé, il n'est pas possible de faire varier ce diamètre en conservant au tambour sa forme générale.

Un autre tambour de ce type est également connu du document US-2012/168087.

Un but de l'invention est de fournir un tambour qui assure une bonne reprise d'efforts tout en présentant une cinématique simple pour le mouvement des secteurs et qui offre plus de liberté pour les changements de diamètre du tambour.

A cet effet, on prévoit selon l'invention un tambour de confection d'une ébauche d'enveloppe de pneumatique, qui comprend :
- des secteurs formant une face circonférentielle du tambour,
- des moyens d'expansion aptes à déplacer les secteurs en direction radiale par rapport à un axe du tambour de sorte que, à un instant quelconque au cours du déplacement, tous les secteurs s'étendent à une même distance de l'axe, et
- des moyens de réglage distincts des moyens d'expansion et aptes à déplacer les secteurs en direction radiale de sorte que, à un instant quelconque au cours du déplacement par les moyens de réglage, tous les secteurs s'étendent à une même distance de l'axe,
les moyens d'expansion étant utilisables quelle que soit une position des secteurs sous l'effet des moyens de réglage.

Ainsi, une fois le diamètre du tambour choisi à l'aide des moyens de réglage, il demeure possible de faire varier ce diamètre tout en conservant au tambour sa configuration générale, par exemple pour extraire la bande de roulement du tambour. On peut ainsi effectuer des mouvements répétitifs d'expansion et de rétraction du tambour en conservant un réglage précis du diamètre du tambour. Cela permet également un gain de place, puisqu'il n'est plus nécessaire d'avoir plusieurs tambours ayant des diamètres différents, dans une plage de diamètres donnés, un seul tambour selon l'invention présentant un diamètre modulable, et aussi un gain de temps, puisqu'on évite ainsi tout démontage/montage du tambour sur la machine d'assemblage.

De préférence, les moyens d'expansion et/ou les moyens de réglage sont aptes à déplacer les secteurs suivant une trajectoire perpendiculaire à l'axe.

Avantageusement, les moyens de réglage sont disposés en série avec au moins une partie des moyens d'expansion.

Il s'agit d'une façon de faire en sorte que les moyens d'expansion soient utilisables quelle que soit la position des secteurs déterminée par les moyens de réglage.

Dans un mode de réalisation, les moyens de réglage sont disposés en série avec une partie seulement des moyens d'expansion.

De préférence, une partie des moyens d'expansion est agencée pour occuper une position fixe en direction radiale par rapport à l'axe.

On peut alors notamment disposer cette partie des moyens d'expansion à proximité de l'axe de rotation du tambour, ce qui réduit l'inertie de ce dernier et engendre une économie d'énergie pour l'entraîner en rotation.

Dans un mode de réalisation, les moyens de réglage relient les moyens d'expansion à un support du tambour.

Avantageusement, les moyens de réglage et/ou les moyens d'expansion forment un mécanisme irréversible.

Dans un mode de réalisation les moyens de réglage seuls forment un mécanisme irréversible. Dans un autre mode de réalisation les moyens d'expansion seuls forment un mécanisme irréversible. Dans encore un autre mode de réalisation, le mécanisme de réglage et le mécanisme d'expansion forment chacun un mécanisme irréversible.

Il n'est donc pas nécessaire de prévoir un organe de maintien de ces moyens dans la position choisie.

Par exemple, les moyens de réglage comprennent au moins une came montée mobile à rotation autour de l'axe.

On peut prévoir que les cames sont au moins au nombre de deux et reliées l'une à l'autre par au moins un organe de synchronisation distinct des moyens d'expansion et des secteurs.

Cet agencement permet notamment de conserver deux appuis radiaux pour chaque secteur.

Dans un mode de réalisation, les moyens d'expansion comprennent au moins un vérin et des pièces agencées pour transformer une sollicitation du vérin parallèle à l'axe en une sollicitation radiale.

De préférence, les moyens d'expansion sont agencés de sorte que les pièces forment au moins un groupe dans lequel des axes d'articulation des pièces du groupe s'étendent dans un même plan radial à l'axe.

Ainsi les sollicitations générées suivant la direction radiale au niveau des secteurs lors de la constitution de la bande de roulement sont transmises jusqu'au support du tambour suivant cette même direction radiale sans engendrer l'apparition d'une composante axiale. On assure de cette façon un maintien radial des secteurs particulièrement robuste, cette rigidité radiale permettant la pose en tension de bandelettes de gomme crue renforcées longitudinalement pour réaliser un frettage de la ceinture sommet qui supporte la bande de roulement de l'ébauche de pneumatique.

On peut prévoir par exemple que les moyens d'expansion comprennent au moins une partie amont, par référence à un sens de transmission de mouvement dans ces moyens, apte à solliciter une partie aval des moyens d'expansion montée glissante contre la partie amont.

De préférence, les parties amont sont au moins au nombre de deux et reliées l'une à l'autre par au moins un organe de synchronisation distinct des moyens de réglage et des secteurs.

Dans un mode de réalisation, les moyens d'expansion comprennent au moins un plateau amont apte à solliciter au moins un support des moyens d'expansion, monté glissant contre le plateau.

De préférence, les moyens d'expansion et les moyens de réglage sont agencés de sorte que chaque secteur est relié à un support du tambour commun aux secteurs au moyen des deux appuis indépendants l'un de l'autre.

Ici encore, on assure un maintien radial des secteurs particulièrement robuste.

De préférence, chaque secteur est d'une seule pièce et/ou rigide.

On prévoit également selon l'invention un procédé de réalisation d'une ébauche de pneumatique dans lequel on réalise au moins une partie de l'ébauche sur un tambour conforme à l'invention.

Nous allons maintenant décrire un mode de réalisation du tambour selon l'invention à l'appui des dessins annexés sur lesquels:
- les figures 1 et 2 sont des vues en perspective d'un tambour selon un mode de réalisation de l'invention, tous les secteurs étant présents sur la figure 1 et un seul secteur étant présent sur la figure 2 ;
- les figures 3 à 6 sont des vues partielles en coupe axiale du tambour de la figure 1 montrant différentes configurations des secteurs ;
- la figure 7 est une vue analogue à la figure 3 montrant les moyens de liaison des cames ;
- la figure 8 est une vue en perspective d'une partie du tambour au niveau des cames ;
- la figure 9 est une vue à plus grande échelle d'une partie du tambour de la figure 4, et
- la figure 10 est une vue à plus grande échelle d'une partie du tambour de la figure 2, analogue à cette dernière.

On a illustré aux figures un tambour 2 selon un mode de réalisation de l'invention. Ce tambour sert à l'assemblage des éléments formant une bande de roulement pour une ébauche crue de pneumatique. Le pneumatique est destiné à une roue de véhicule qui pourra être un véhicule utilitaire, un véhicule de type léger, un véhicule de tourisme, un véhicule de type poids lourd ou encore un engin de génie civil.

Le tambour comprend un support central ou fût 4 et présente une forme générale à symétrie de révolution d'axe 6 qui forme l'axe principal du tambour. Dans toute la suite, et sauf indication contraire, la direction axiale désigne une direction parallèle à l'axe 6 et la direction radiale désigne une direction quelconque radiale à ce dernier.

Le tambour présente des secteurs externes 8 qui s'étendent en périphérie du tambour pour former la face circonférentielle externe 10 du tambour qui forme la face de travail sur laquelle sont disposés les éléments de l'ébauche. Cette face 10 a, en l'espèce, une forme générale cylindrique à section circulaire dans un plan perpendiculaire à l'axe 6. Le tambour forme donc ici par exemple ce que l'homme du métier désigne souvent par une « forme plate ».

En l'espèce, les secteurs 8 sont tous identiques entre eux. Ils sont dans le présent exemple au nombre de 24 mais ce nombre pourrait varier. Dans cet exemple, chaque secteur est rigide et formé d'une seule pièce. Il présente ici une forme générale en peigne. Ainsi, le secteur a une forme générale rectangulaire dont la plus grande dimension est parallèle à l'axe 6. Les deux bords longitudinaux du rectangle sont découpés pour former des dentures de sorte que chaque bord d'un peigne présente des dents aptes à s'imbriquer avec les dents du bord du peigne adjacent. Les secteurs étant mobiles suivant une direction perpendiculaire à l'axe 6, cette forme des secteurs permet de faire varier leur distance par rapport à l'axe tout en assurant une certaine continuité de matière entre les peignes suivant la circonférence du tambour, les dentures des peignes adjacents étant plus ou moins imbriquées selon la position radiale des secteurs.

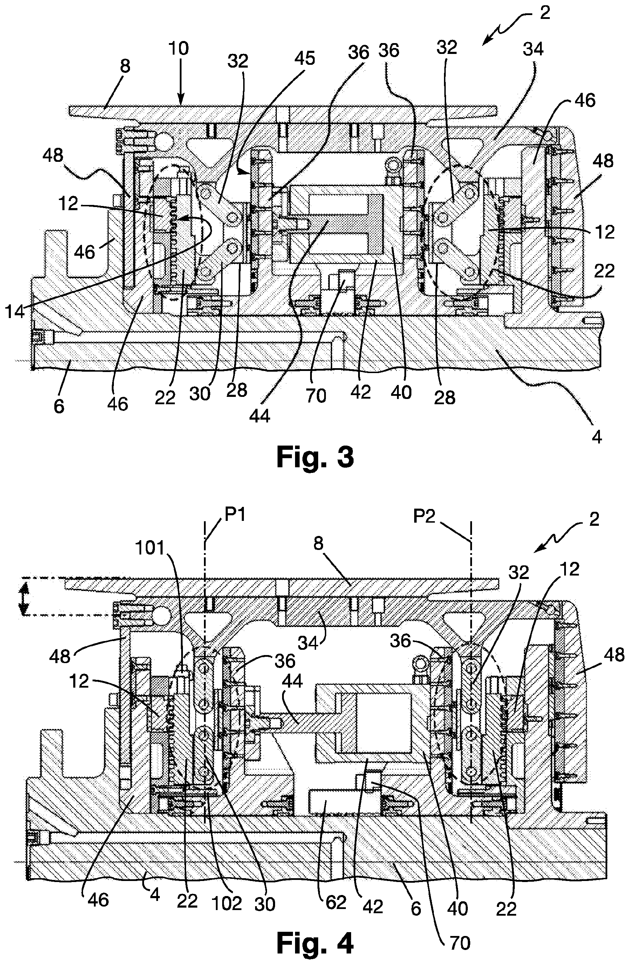

Nous allons maintenant présenter les organes qui relient les secteurs au support 4 et qui assurent à la fois leur guidage et leur entraînement. Nous décrirons en détail les organes qui se trouvent en partie gauche du tambour sur les figures 3 à 6 sachant que le tambour présente en partie droite des organes analogues s'étendant symétriquement aux premiers par rapport à un plan de symétrie médian perpendiculaire à l'axe 6.

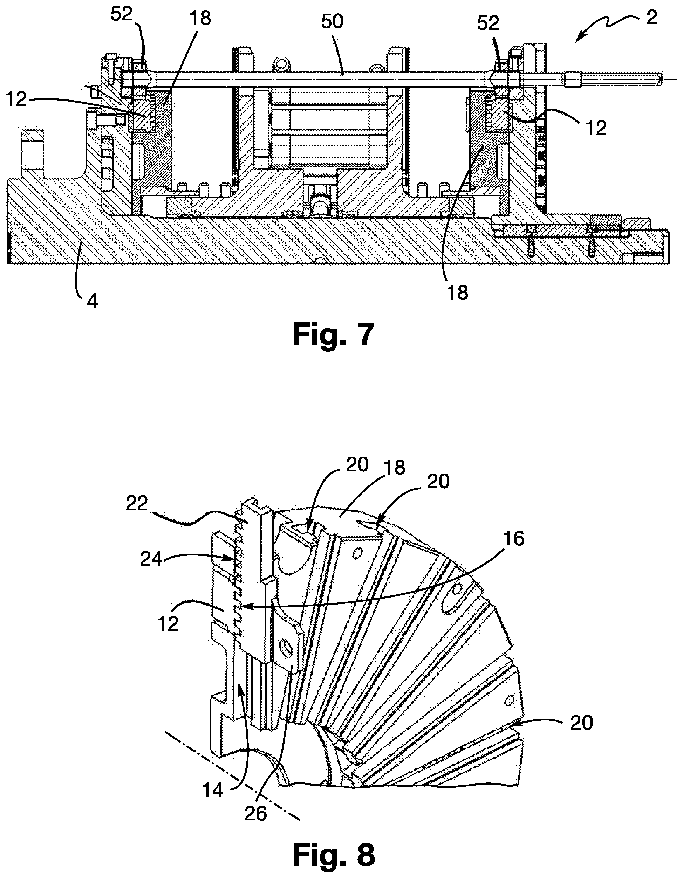

Le tambour comporte une came 12 comprenant un plateau de forme annulaire présentant deux faces perpendiculaires à l'axe 6 et monté mobile à rotation autour de ce dernier coaxialement. Sur la figure 3, la came s'étend en partie gauche du tambour et présente sur sa face droite 14, également visible à la figure 8, une gorge 16 en forme de spirale centrée sur l'axe 6. Une motorisation non représentée assure la mise en rotation de la came par rapport au support 4 autour de l'axe.

Le tambour comprend un disque 18, lui aussi perpendiculaire à l'axe 6 et centré sur ce dernier, qui comprend des logements radiaux 20 visibles notamment à la figure 8. Chacun de ces logements reçoit un mors 22 monté mobile à coulissement dans le logement par rapport au disque suivant une direction perpendiculaire à l'axe. Le disque 18 étant accolé à la came 12, chaque logement 20 est ouvert en direction de cette dernière pour permettre au mors de venir en prise avec la spirale 16. A cette fin, le mors présente une denture 24 complémentaire de la spirale. Il présente également une languette inférieure arrière 26 s'étendant en direction opposée à celle de la came. Chaque logement de mors comprend des butées haute 101 et basse 102 référencées à la figure 4 et définissant les extrémités de fin de course de coulissement du mors. Le système mors/spirale, qui fait partie des moyens de réglage, forme ainsi un mécanisme irréversible.

Le tambour comprend également un support de biellettes 28 ainsi que deux biellettes rectilignes 30 et 32, chacune articulée directement au support. De plus, la biellette 30 est articulée directement à la languette 26. Les deux biellettes et le support de biellettes forment une genouillère.

Pour chaque secteur, le tambour comprend également un support de secteur 34. Ces supports sont donc également en l'espèce au nombre de 24. Le support a une forme allongée suivant une direction parallèle à l'axe 6 et présente en partie gauche un piétement auquel est directement articulée la biellette 32. Tous les axes d'articulation des biellettes sont parallèles entre eux et s'étendent dans une direction orthogonale à l'axe 6 et non sécant avec ce dernier. Les axes d'articulation des biellettes au support de biellette 28 s'étendent dans un même plan perpendiculaire à l'axe 6. Il en est de même pour les deux autres axes d'articulation des biellettes respectivement à la languette 26 et au support de secteur 34. Et ces propriétés demeurent vraies quelle que soit la configuration du tambour c'est-à-dire quelle que soit la position des secteurs déterminée par les moyens d'expansion ou les moyens de réglage comme on le verra.

Comme annoncé, le tambour comprend en partie droite sur la figure 3 des pièces analogues occupant une position symétrique de celles qui viennent d'être présentées. On retrouve donc une came 12, un disque 18 avec des mors 22, un support de biellettes 28, des biellettes 30 et 32 et un autre piétement du même support de secteur 34.

Le secteur 8 est rigidement fixé au support de secteur 34 de sorte que la position de ce dernier détermine entièrement la position du secteur.

Le tambour comprend en outre deux plateaux d'actionnement 36 s'étendant chacun aussi dans un plan perpendiculaire à l'axe et centrés sur ce dernier. Les plateaux sont montés coulissants sur le support central 4. Entre les plateaux, hors du support 4, le tambour comprend quatre actionneurs 40 sous la forme en l'espèce chacun d'un vérin pneumatique, comprenant un corps 42 et un piston 44. L'extrémité libre du piston est reliée au plateau gauche 36 tandis que l'extrémité du corps opposée au piston est rigidement fixée au plateau droit. Les vérins sont ici logés à l'intérieur du tambour.

La face gauche 45 du plateau gauche 36 opposée au vérin forme une piste de glissement pour le support de biellettes 28. Il en est de même en partie droite du tambour pour l'autre plateau et l'autre support de biellettes.

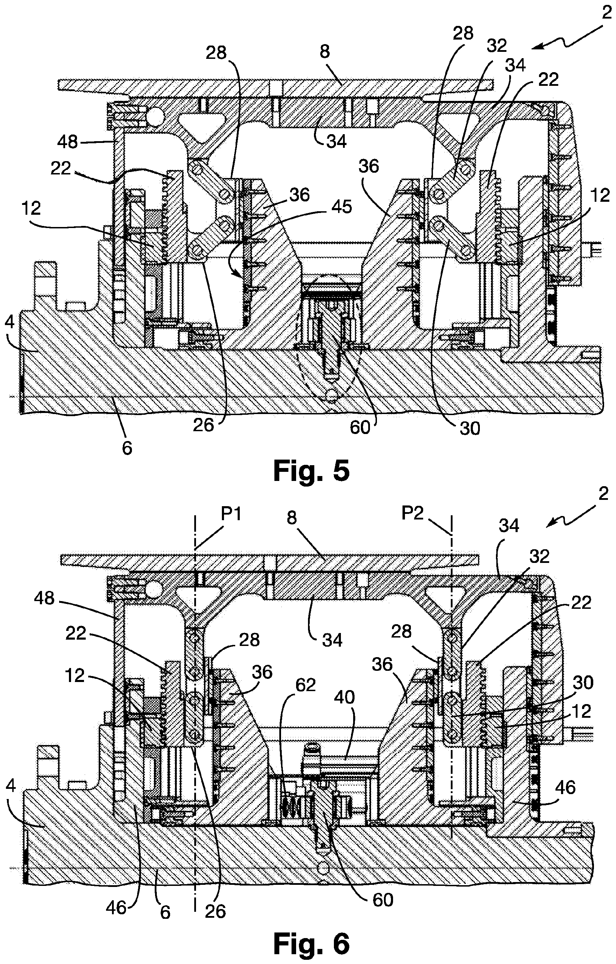

Comme illustré aux figures 5, 6 et 10, le tambour comprend un pignon médian 60 monté mobile à rotation dans le fût 4 autour d'un axe radial perpendiculaire à l'axe 6. Ce pignon est en prise avec deux crémaillères 62 respectivement solidaires des deux plateaux d'actionnement 36. Cet agencement assure un déplacement symétrique de ces plateaux de part et d'autre du plan médian du tambour. Chaque crémaillère est partiellement logée dans un logement 67 du plateau opposé lorsque les plateaux sont dans leur configuration la plus rapprochée. Un autre ensemble à pignon et crémaillères est aussi prévu, en position diamétralement opposée au premier.

Le tambour comprend également trois disques de positionnement 46 rigidement fixés au support 4. En partie gauche du tambour, l'un des disques 46 contribue au maintien en position de la came 12. De plus, il s'étend à distance de l'autre disque 46 de la partie gauche pour définir avec ce dernier un logement dans lequel est monté coulissant en direction perpendiculaire à l'axe un bras 48 solidaire du support 34 de secteur. En partie droite du tambour, un autre bras 48 du support de secteur est également monté coulissant en direction perpendiculaire à l'axe contre une face du troisième disque 46. Les trois disques de positionnement 46 et les deux bras 48 assurent ainsi le guidage radial du support de secteur au cours de son déplacement. Chaque support de secteur dispose ainsi de sa propre paire de bras de guidage 48.

La plupart des pièces du tambour sont réalisées en métal, par exemple certaines en aluminium et d'autres en acier.

Les vérins 40, les plateaux 36, les supports de biellettes et les biellettes forment des moyens d'expansion-rétraction du tambour et forment un mécanisme irréversible en configuration étendue (biellettes alignées). On a ainsi illustré aux figures 3 et 4 le tambour dans les configurations respectivement rétractée et étendue. Pour passer de la première à la deuxième, on commande les vérins 40 dont l'allongement provoque l'éloignement des plateaux 36 l'un de l'autre suivant la direction de l'axe 6. En raison de l'agencement à pignon et crémaillères et du guidage radial auquel est contraint chaque support de secteur 34, l'éloignement mutuel des plateaux 36 se fait de façon symétrique par rapport au plan médian du tambour perpendiculaire à l'axe 6. Au cours du mouvement du plateau gauche, le support de biellettes 28 correspondant glisse sur la piste 45 en direction radiale en s'éloignant de l'axe. La came 12 et les mors 22 étant fixes à coulissement axial, cela engendre la rotation de la biellette 30 autour de son axe inférieur et le basculement de la biellette supérieure 32. Les biellettes transforment ainsi une sollicitation axiale des vérins en une sollicitation radiale. Des déplacements analogues ont lieu simultanément en partie droite du tambour.

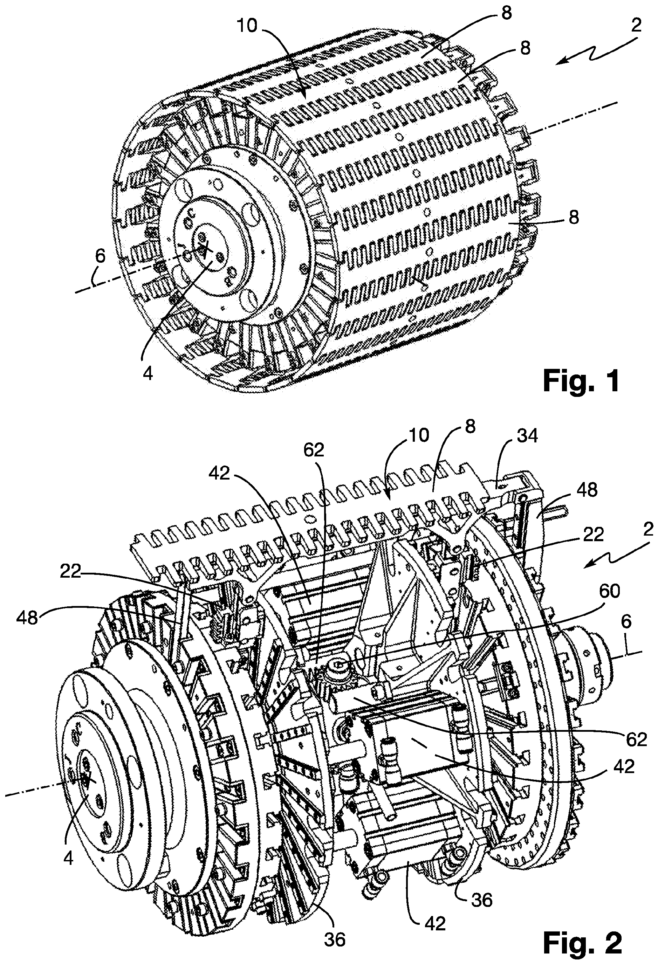

Ces mouvements engendrent le coulissement du support de secteur 34 et du secteur 8 suivant la direction perpendiculaire à l'axe 6. Sachant que tous les secteurs 8 se trouvent initialement à une même distance de l'axe, comme illustré à la figure 1, le mouvement qui vient d'être décrit est identique et simultané pour tous les secteurs de sorte que, à un instant quelconque du changement de configuration du tambour, tous les secteurs se trouvent à une même distance de l'axe. Le tambour conserve donc sa forme générale cylindrique au cours de cette expansion radiale. On aboutit alors à la configuration de la figure 4 dans laquelle le diamètre du tambour mesuré au niveau de la face externe des secteurs est supérieur à celui mesuré dans la configuration de la figure 3. La configuration de la figure 4 correspond à la fin de course des plateaux d'actionnement 36, les plateaux 36 étant en butée axiale contre les disques 18. Cette butée fige la position des biellettes et des supports de biellettes.

Dans cette position, les deux biellettes 30 et 32 en partie gauche du tambour ont leurs quatre axes d'articulation qui s'étendent cette fois dans un même plan P1 perpendiculaire à l'axe 6. Et ce même plan inclut tous les axes d'articulation des biellettes du tambour dans la partie gauche. Il en est de même pour les biellettes de la partie droite du tambour avec leur propre plan commun P2. Dans ces conditions, une sollicitation radiale sur la face externe des secteurs 8 est transmise au support central 4 également de façon radiale et sans engendrer de composante axiale. On assure ainsi un soutien robuste des secteurs par le fut 4 et une bonne reprise d'efforts. La configuration étendue est donc irréversible puisqu'elle est maintenue par deux mécanismes irréversibles que sont les moyens d'expansion et le système mors/spirale. Ainsi, dans cette configuration, le tambour est capable de résister sans apport d'énergie à un effort radial dirigé vers l'axe 6 lorsqu'une bande de roulement est appliquée en tension. Le système est autobloquant puisque les deux mécanismes irréversibles sont disposés en série. Naturellement, l'actionnement des vérins 40 en sens inverse provoque le rapprochement des plateaux 36 et le retour à la configuration de la figure 3. Ces moyens d'expansion formant ainsi aussi des moyens de rétraction. En particulier, la genouillère formée par le support de biellette 28 et les biellettes 30, 32 permet, une fois sous charge, le passage de la configuration étendue à la configuration rétractée sous l'effet d'un effort faible du vérin.

Par ailleurs, les cames 12 et les mors 22 forment des moyens de réglage du diamètre du tambour qui sont utilisables indépendamment de l'actionnement des moyens d'expansion. Pour actionner les moyens de réglage, en supposant qu'on se trouve dans la configuration de la figure 3, on commande la mise en rotation des cames 12. Celles-ci, en prise avec les mors 22, engendrent le coulissement de ces derniers suivant une direction perpendiculaire à l'axe et opposée à ce dernier pour aboutir à une configuration du type de celle de la figure 5. Au cours de ce mouvement, et en supposant que les moyens d'expansion sont inactifs, les mors de chaque secteur entraînent dans leur mouvement de coulissement les deux biellettes avec leur support 28 ainsi que le support de secteur 34, le support de biellette 28 glissant contre la piste 45. On est donc passé de la configuration de la figure 3 à celle de la figure 5 sous l'effet des moyens de réglage et sans actionner les moyens d'expansion.

Ici encore, sachant que tous les secteurs 8 se trouvent initialement à une même distance de l'axe, comme illustré à la figure 1, le mouvement qui vient d'être décrit est identique et simultané pour tous les secteurs de sorte que, à un instant quelconque du changement de diamètre du tambour, tous les secteurs se trouvent à une même distance de l'axe. Le tambour conserve donc sa forme générale cylindrique au cours de ce changement. Ce mécanisme présente notamment l'avantage de ne nécessiter aucun démontage afin de régler le diamètre du tambour et de constituer un système centralisé de réglage de la disposition des secteurs, chaque secteur subissant un mouvement semblable lors de la mise en oeuvre des moyens de réglage.

Les figures 3 et 5 correspondent aux extrémités de la course des cames et des mors. Il en est de même sur les figures 4 et 6. Mais on peut tout à fait choisir un réglage du diamètre du tambour qui soit intermédiaire entre ces deux positions.

Par ailleurs, quel que soit le diamètre choisi au cours de ce réglage, on peut ensuite commander les moyens d'expansion comme précédemment. C'est ce qui a été illustré aux figures 5 et 6. Sur celles-ci, les moyens de réglage ayant déterminé un grand diamètre du tambour, on fait passer ce dernier d'une position rétractée à une position étendue.

Le mécanisme de ce tambour permet donc de choisir une position quelconque des moyens de réglage puis, dans cette position, de commander les moyens d'expansion. Inversement, il permet de choisir une position quelconque des moyens d'expansion puis de commander les moyens de réglage pour arriver à une autre position quelconque. Le plus petit diamètre du tambour est donc obtenu lorsque les moyens de réglage et les moyens d'expansion sont chacun placés dans la configuration de plus petit diamètre. Il en va de même et de façon analogue pour la configuration de plus grand diamètre.

On voit que les moyens de réglage relient les moyens d'expansion au support central 4 du tambour. De plus, les moyens de réglage sont disposés en série avec une partie seulement des moyens d'expansion, formée par les biellettes 30, 32 et leur support 28. L'autre partie des moyens d'expansion, formée par les vérins 40 et les plateaux d'actionnement 36, est agencée pour occuper une position fixe en direction radiale par rapport à l'axe. Dans les moyens d'expansion, les plateaux d'actionnement 36 forment une partie amont, par référence à un sens de transmission du mouvement dans ces moyens, apte à solliciter le support de biellettes 28 de ces moyens d'expansion. Enfin, les moyens d'expansion et les moyens de réglage sont agencés de sorte que chaque secteur 8 est relié au fût 4, commun aux secteurs, au moyen de deux appuis indépendants l'un de l'autre.

La figure 7 illustre un organe de synchronisation du mouvement des deux cames qui comprend une tige 50 parallèle à l'axe 6 mais distante du support 4. Cette tige porte deux pignons 52 rigidement fixés à la tige et chacun en engrènement avec un secteur denté de l'une des cames 12. Cette même tige peut être utilisée pour assurer l'entraînement des cames en rotation en reliant la tige à une motorisation adaptée non illustrée.

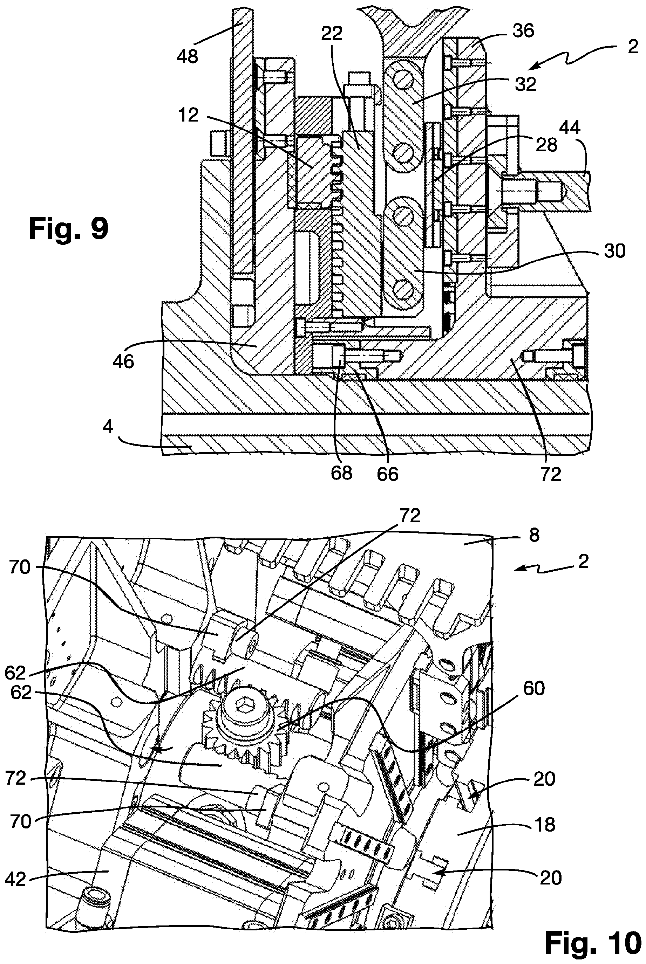

Comme illustré notamment à la figure 9, chaque plateau d'actionnement 36 présente un rebord contigu au fût 4, dirigé vers le plateau portant la came 12 et muni d'un prolongement annulaire axial 66 fixé au plateau par exemple au moyens de vis 68. Lorsque les plateaux d'actionnement 36 occupent leur position la plus éloignée l'un de l'autre, ils sont en butée axiale contre les supports des cames via ces prolongements 66 comme illustré aux figure 4 et 6. Le bon dimensionnement de ces prolongements, via leur usinage par exemple, permet de régler la position des plateaux d'actionnement alignés. On peut prévoir que les plateaux sont en aluminium tandis que les prolongements formant pièces de butée sont en acier.

En référence à la figure 10, on observe que chaque crémaillère 62 est reliée au plateau d'actionnement 36 associé par l'intermédiaire d'une pièce de support 70. Cette dernière est fixée au plateau par une vis 72. La crémaillère présente une encoche dans laquelle pénètre un relief de la pièce de support 70 afin d'assurer leur solidarisation en déplacement axial. La crémaillère est entièrement tenue par emboîtement dans la pièce de support pour éviter de voir apparaître des contraintes et de générer un hyperstatisme. On choisit la dimension axiale de la pièce de support, par exemple par usinage, afin de régler la position axiale de la crémaillère par rapport au plateau associé. Ce choix a lieu ici aussi en mettant le tambour dans une configuration du type de celles des figures 4 et 6. Il est effectué de sorte que les crémaillères donnent aux plateaux en butée axiale une position telle que les axes d'articulation des biellettes gauches et droites soient inclus dans leurs plans respectifs P1 et P2.

Ce tambour sert à la réalisation d'une ébauche crue de pneumatique, par exemple à la constitution d'une bande de roulement.

Avant de réaliser cette dernière, on choisit le diamètre du tambour avec les moyens de réglage, puis on place les moyens d'expansion dans la configuration étendue.

On constitue ensuite une bande de roulement en assemblant différent éléments sur les secteurs pendant que le tambour est en rotation. On peut notamment enrouler à grande vitesse une ou plusieurs bandelettes de gomme crue renforcées longitudinalement pour réaliser un frettage de la ceinture sommet. Cet enroulement peut avoir lieu avec une tension relativement élevée de la bandelette, la reprise d'efforts étant assurée au sein du tambour comme expliqué précédemment.

Une fois la bande de roulement constituée, on peut actionner les moyens d'expansion pour faire passer le tambour en configuration rétractée afin d'extraire la bande de roulement.

On replace ensuite le tambour en configuration étendue en commandant les moyens d'expansion, et on constitue une nouvelle bande de roulement comme précédemment.

Si l'on souhaite constituer une bande de roulement d'un autre modèle de pneumatique qui présente un diamètre interne différent de celui de la précédente, on choisit un nouveau diamètre sur le tambour avec les moyens de réglage et on constitue cette bande comme précédemment.

Le mécanisme est suffisamment souple et robuste pour permettre d'actionner les moyens d'expansion à vitesse relativement élevée et un très grand nombre de fois dans une même journée, par exemple plusieurs dizaines ou plusieurs centaines de fois pour fabriquer autant de bandes de roulement. Il sera courant par ailleurs d'actionner les moyens de réglage seulement quelques fois dans la journée à l'occasion des changements de modèle.

Ce tambour est suffisamment rigide en position étendue pour accepter des efforts radiaux importants sans déformation de la surface de pose. Il est apte par exemple à supporter une sollicitation de 120 daN par secteur lorsqu'il s'agit de fabriquer une enveloppe de pneumatique pour un véhicule de tourisme. On ne constate pas de déformation sous l'effet d'une charge, par exemple une mise en cône ou un collapsage non désiré au niveau du diamètre médian. Sachant que les secteurs sont chacun associé à deux appuis, on assure la reprise d'efforts quel que soit l'endroit du secteur où s'exerce la sollicitation. Cet endroit en effet peut varier le long de l'axe 6 au cours de l'enroulement d'une bandelette pour réaliser l'ébauche.

Pour résumé, l'invention présente les avantages suivants :
- il existe une rigidité radiale du tambour lorsqu'il est en configuration étendue, ce qui permet notamment la pose en tension d'une bande de roulement ou d'un autre produit.
- il est possible d'utiliser les moyens d'expansion à n'importe quel réglage des moyens de réglage.
- la présence de moyens de réglage et de moyens d'expansion sur un même tambour permet un gain de place puisqu'il n'est pas nécessaire d'avoir plusieurs tambours différents pour une plage de diamètre du tambour donnée, cela évite aussi tout démontage du tambour sur la machine.
- les moyens d'expansion sont simples et peuvent être utilisés un grand nombre de fois sur une journée. Ils permettent également une bonne reproductibilité de la surface de pose du produit souhaité.
- dans la configuration étendue, de par l'alignement des biellettes, l'effort à fournir par les vérins est nul.
- la configuration étendue est maintenue grâce à deux mécanismes irréversibles formés par l'alignement des biellettes et le système mors/spirale en série. Le dispositif dans cette configuration est autobloquant et permet une transmission des efforts purement radiaux.
- une fois sous charge, il faut un effort très faible pour passer de la configuration étendue à la configuration rétractée grâce à la genouillère mécanique formée par les deux biellettes et le support de biellette.
- il n'existe en théorie aucune transmission d'effort axial, les efforts sont purement radiaux.
- les moyens de réglage sont centralisés, ils permettent de modifier la position de tous les secteurs en même temps et de façon identique. Ces moyens de réglage ne nécessitent aucun démontage.

Bien entendu, on pourra apporter à l'invention de nombreuses modifications sans sortir du cadre de celle-ci.

On pourra utiliser le tambour pour fabriquer une partie de l'ébauche autre que la bande de roulement.

On peut donner aux secteurs une forme galbée ou tout autre profil.

## Revendications

1. Tambour de confection (2) d'une ébauche d'enveloppe de pneumatique, comprenant :
- des secteurs (8) formant une face circonférentielle du tambour,
- des moyens d'expansion (40, 36, 28, 30, 32) aptes à déplacer les secteurs en direction radiale par rapport à un axe (6) du tambour de sorte que, à un instant quelconque au cours du déplacement, tous les secteurs s'étendent à une même distance de l'axe, et
- des moyens de réglage (12, 22) aptes à déplacer les secteurs en direction radiale de sorte que, à un instant quelconque au cours du déplacement par les moyens de réglage, tous les secteurs s'étendent à une même distance de l'axe,
**caractérisé en ce que** les moyens de réglage sont distincts des moyens d'expansion et **en ce que** les moyens d'expansion sont utilisables quelle que soit une position des secteurs sous l'effet des moyens de réglage.

2. Tambour selon la revendication précédente dans lequel les moyens d'expansion et/ou les moyens de réglage sont aptes à déplacer les secteurs suivant une trajectoire perpendiculaire à l'axe (6).

3. Tambour selon au moins l'une quelconque des revendications précédentes dans lequel les moyens de réglage (12, 22) sont disposés en série avec au moins une partie (28, 30, 32) des moyens d'expansion.

4. Tambour selon au moins l'une quelconque des revendications précédentes dans lequel les moyens de réglage sont disposés en série avec une partie (28, 30, 32) seulement des moyens d'expansion.

5. Tambour selon au moins l'une quelconque des revendications précédentes dans lequel une partie (40, 36) des moyens d'expansion est agencée pour occuper une position fixe en direction radiale par rapport à l'axe.

6. Tambour selon au moins l'une quelconque des revendications précédentes dans lequel les moyens de réglage (12, 22) relient les moyens d'expansion (28, 30, 32) à un support (4) du tambour.

7. Tambour selon au moins l'une quelconque des revendications précédentes dans lequel les moyens de réglage (12, 22) et/ou les moyens d'expansion forment un mécanisme irréversible.

8. Tambour selon au moins l'une quelconque des revendications précédentes dans lequel les moyens de réglage comprennent au moins une came (12) montée mobile à rotation autour de l'axe.

9. Tambour selon la revendication précédente dans lequel les cames (12) sont au moins au nombre de deux et reliées l'une à l'autre par au moins un organe de synchronisation (50) distinct des moyens d'expansion et des secteurs.

10. Tambour selon au moins l'une quelconque des revendications précédentes dans lequel les moyens d'expansion comprennent au moins un vérin (40) et des pièces (28, 30, 32) agencées pour transformer une sollicitation du vérin parallèle à l'axe en une sollicitation radiale.

11. Tambour selon la revendication précédente dans lequel les moyens d'expansion sont agencés de sorte que les pièces (28, 30, 32) forment au moins un groupe dans lequel des axes d'articulation des pièces du groupe s'étendent dans un même plan radial à l'axe.

12. Tambour selon au moins l'une quelconque des revendications précédentes dans lequel les moyens d'expansion comprennent au moins une partie amont, par référence à un sens de transmission de mouvement dans ces moyens, telle qu'un plateau (36), apte à solliciter une partie aval des moyens d'expansion, telle qu'un support (28), montée glissante contre la partie amont.

13. Tambour selon la revendication précédente dans lequel les parties amont (36) sont au moins au nombre de deux et reliées l'une à l'autre par au moins un organe de synchronisation (60) distinct des moyens de réglage et des secteurs.

14. Tambour selon au moins l'une quelconque des revendications précédentes dans lequel les moyens d'expansion et les moyens de réglage sont agencés de sorte que chaque secteur est relié à un support (4) du tambour commun aux secteurs au moyen des deux appuis indépendants l'un de l'autre.

15. Tambour selon au moins l'une quelconque des revendications précédentes dans lequel chaque secteur (8) est d'une seule pièce.

16. Tambour selon au moins l'une quelconque des revendications précédentes dans lequel chaque secteur (8) est rigide.

17. Procédé de réalisation d'une ébauche de pneumatique **caractérisé en ce qu'**on réalise au moins une partie de l'ébauche sur un tambour (2) conforme à au moins l'une quelconque des revendications précédentes.

## Patentansprüche

1. Aufbautrommel (2) eines Luftreifenmantelrohlings, die enthält:
- Sektoren (8), die eine Umfangsseite der Trommel bilden,
- Ausdehnungseinrichtungen (40, 36, 28, 30, 32), die die Sektoren so in radialer Richtung bezüglich einer Achse (6) der Trommel verschieben können, dass zu einem beliebigen Zeitpunkt während der Verschiebung alle Sektoren sich in gleichem Abstand zur Achse erstrecken, und
- Einstelleinrichtungen (12, 22), die die Sektoren so in radialer Richtung verschieben können, dass zu einem beliebigen Zeitpunkt während der Verschiebung durch die Einstelleinrichtungen alle Sektoren sich in gleichem Abstand zur Achse erstrecken,
**dadurch gekennzeichnet, dass** die Einstelleinrichtungen sich von den Ausdehnungseinrichtungen unterscheiden, und dass die Ausdehnungseinrichtungen unabhängig von einer Stellung der Sektoren unter der Wirkung der Einstelleinrichtungen nutzbar sind.

2. Trommel nach dem vorhergehenden Anspruch, wobei die Ausdehnungseinrichtungen und/oder die Einstelleinrichtungen die Sektoren gemäß einer Bahn lotrecht zur Achse (6) verschieben können.

3. Trommel nach mindestens einem der vorhergehenden Ansprüche, wobei die Einstelleinrichtungen (12, 22) mit mindestens einem Teil (28, 30, 32) der Ausdehnungseinrichtungen in Reihe angeordnet sind.

4. Trommel nach mindestens einem der vorhergehenden Ansprüche, wobei die Einstelleinrichtungen nur mit einem Teil (28, 30, 32) der Ausdehnungseinrichtungen in Reihe angeordnet sind.

5. Trommel nach mindestens einem der vorhergehenden Ansprüche, wobei ein Teil (40, 36) der Ausdehnungseinrichtungen eingerichtet ist, um eine ortsfeste Stellung in radialer Richtung bezüglich der Achse einzunehmen.

6. Trommel nach mindestens einem der vorhergehenden Ansprüche, wobei die Einstelleinrichtungen (12, 22) die Ausdehnungseinrichtungen (28, 30, 32) mit einem Träger (4) der Trommel verbinden.

7. Trommel nach mindestens einem der vorhergehenden Ansprüche, wobei die Einstelleinrichtungen (12, 22) und/oder die Ausdehnungseinrichtungen einen unumkehrbaren Mechanismus formen.

8. Trommel nach mindestens einem der vorhergehenden Ansprüche, wobei die Einstelleinrichtungen mindestens einen Nocken (12) enthalten, der drehbeweglich um die Achse montiert ist.

9. Trommel nach dem vorhergehenden Anspruch, wobei es mindestens zwei Nocken (12) gibt, die miteinander durch mindestens ein Synchronisationsorgan (50) verbunden sind, das sich von den Ausdehnungseinrichtungen und den Sektoren unterscheidet.

10. Trommel nach mindestens einem der vorhergehenden Ansprüche, wobei die Ausdehnungseinrichtungen mindestens einen Arbeitszylinder (40) und Bauteile (28, 30, 32) enthalten, die eingerichtet sind, um eine Beanspruchung des Arbeitszylinders parallel zur Achse in eine radiale Beanspruchung umzuwandeln.

11. Trommel nach dem vorhergehenden Anspruch, wobei die Ausdehnungseinrichtungen so eingerichtet sind, dass die Bauteile (28, 30, 32) mindestens eine Gruppe formen, in der Gelenkachsen der Bauteile der Gruppe sich in einer gleichen Ebene radial zur Achse erstrecken.

12. Trommel nach mindestens einem der vorhergehenden Ansprüche, wobei die Ausdehnungseinrichtungen mindestens einen stromaufwärtigen Teil bezüglich einer Bewegungsübertragungsrichtung in diesen Einrichtungen enthalten, wie eine Platte (36), die einen stromabwärtigen Teil der Ausdehnungseinrichtungen, wie einen Träger (28), der gegen den stromaufwärtigen Teil gleitend montiert ist, beanspruchen kann.

13. Trommel nach dem vorhergehenden Anspruch, wobei es mindestens zwei stromaufwärtige Teile (36) gibt, die miteinander durch mindestens ein Synchronisationsorgan (60) verbunden sind, das sich von den Einstelleinrichtungen und den Sektoren unterscheidet.

14. Trommel nach mindestens einem der vorhergehenden Ansprüche, wobei die Ausdehnungseinrichtungen und die Einstelleinrichtungen so eingerichtet sind, dass jeder Sektor mit einem den Sektoren gemeinsamen Träger (4) der Trommel mittels der zwei voneinander unabhängigen Auflager verbunden ist.

15. Trommel nach mindestens einem der vorhergehenden Ansprüche, wobei jeder Sektor (8) aus einem Stück besteht.

16. Trommel nach mindestens einem der vorhergehenden Ansprüche, wobei jeder Sektor (8) starr ist.

17. Verfahren zur Herstellung eines Luftreifenrohlings, **dadurch gekennzeichnet, dass** mindestens ein Teil des Rohlings auf einer Trommel (2) entsprechend mindestens einem der vorhergehenden Ansprüche hergestellt wird.

## Claims

1. Drum (2) for building a green tyre casing, comprising:
- sectors (8) that form a circumferential face of the drum,
- expansion means (40, 36, 28, 30, 32) that are able to move the sectors in a radial direction with respect to an axis (6) of the drum such that, at any time during the movement, all of the sectors extend at one and the same distance from the axis, and
- adjustment means (12, 22) that are able to move the sectors in a radial direction such that, at any time during the movement by the adjustment means, all of the sectors extend at one and the same distance from the axis,
**characterized in that** the adjustment means are separate from the expansion means and **in that** the expansion means are usable regardless of a position of the sectors under the effect of the adjustment means.

2. Drum according to the preceding claim, wherein the expansion means and/or the adjustment means are able to move the sectors along a path perpendicular to the axis (6).

3. Drum according to at least either one of the preceding claims, wherein the adjustment means (12, 22) are disposed in series with at least some (28, 30, 32) of the expansion means.

4. Drum according to at least any one of the preceding claims, wherein the adjustment means are disposed in series with only some (28, 30, 32) of the expansion means.

5. Drum according to at least any one of the preceding claims, wherein some (40, 36) of the expansion means are designed to take up a fixed position in the radial direction with respect to the axis.

6. Drum according to at least any one of the preceding claims, wherein the adjustment means (12, 22) connect the expansion means (28, 30, 32) to a support (4) of the drum.

7. Drum according to at least any one of the preceding claims, wherein the adjustment means (12, 22) and/or the expansion means form an irreversible mechanism.

8. Drum according to at least any one of the preceding claims, wherein the adjustment means comprise at least one cam (12) mounted so as to be able to rotate about the axis.

9. Drum according to the preceding claim, wherein there are at least two cams (12), which are connected together by at least one synchronization member (50) that is separate from the expansion means and the sectors.

10. Drum according to at least any one of the preceding claims, wherein the expansion means comprise at least one cylinder (40) and components (28, 30, 32) that are designed to convert a load on the cylinder parallel to the axis into a radial load.

11. Drum according to the preceding claim, wherein the expansion means are designed such that the components (28, 30, 32) form at least one group in which the hinge pins of the components of the group extend in one and the same plane radial to the axis.

12. Drum according to at least any one of the preceding claims, wherein the expansion means comprise at least one upstream part, with reference to a direction of transmission of movement in these means, such as a plate (36), that is able to load a downstream part of the expansion means, such as a support (28), that is mounted so as to slide against the upstream part.

13. Drum according to the preceding claim, wherein there are at least two upstream parts (36), which are connected together by at least one synchronization member (60) that is separate from the adjustment means and the sectors.

14. Drum according to at least any one of the preceding claims, wherein the expansion means and the adjustment means are designed such that each sector is connected to a support (4) of the drum that is common to the sectors by means of the two mutually independent supporting means.

15. Drum according to at least any one of the preceding claims, wherein each sector (8) is a single part.

16. Drum according to at least any one of the preceding claims, wherein each sector (8) is rigid.

17. Method for producing a green tyre, **characterized in that** at least a part of the green tyre is produced on a drum (2) in accordance with at least any one of the preceding claims.
